# FASCICULE DE BREVET EUROPEEN

(11) **EP 1 577 994 B1**
(45) Date de publication et mention de la délivrance du brevet: **27.11.2013**
(21) Numéro de dépôt: 05290621.1
(22) Date de dépôt: 21.03.2005
(51) Int. Cl.: H02B 13/00

(54) **Système de raccordement électrique de cellules à haute tension**
Elektrische Kupplung zwischen Hochspannungsschaltanlagen
Electrical connection between high voltage switchgear cells

(30) Priorité: 19.03.2004 FR 0402849
(43) Date de publication de la demande: 21.09.2005
(73) Titulaire: Pommier, 65200 Bagnères de Bigorre (FR)
(72) Inventeur: Vercelli, Bruno, 65360 Bernac Debat (FR); Coquaz, Paul, 38110 St Jean de Soudain (FR)
(74) Mandataire: Regimbeau

(56) Documents cités:
- DE-A- 1 490 552
- DE-C- 10 119 183
- DE-C1- 10 119 333

## Description

La présente invention est relative à un dispositif de raccordement électrique entre au moins une cellule d'appareillage à haute tension étanche contenant un gaz isolant du type SF6, ou hexafluorure de soufre, et un appareil électrique associés, cet appareil électrique associé pouvant être un transformateur ou une autre cellule d'appareillage à haute tension étanche contenant un gaz isolant.

### PRESENTATION GENERALE DE L'ART ANTERIEUR

Il a déjà été proposé un certain nombre de système permettant de raccorder électriquement deux cellules d'appareil à haute tension contenant un gaz isolant. Ces systèmes sont de différents types.

Le document DE 101 19 183 décrit un dispositif selon le préambule de la revendication 1.

Le document WO02/35668 publié le 02 mai 2002 décrit un système de raccordement de cellule pour mécanisme électrique dont le but est de maintenir une imperméabilité mécanique et électrique. Le système comprend un manchon étanche, deux tubes métalliques, et une barre conductrice composée d'un anneau, de parties conductrices et de ressorts. Au centre du manchon étanche, entre les deux tubes métallique, est placé la barre conductrice dont le diamètre extérieur de l'anneau est égal au diamètre intérieur dudit manchon étanche. La complexité de réalisation de la barre conductrice ainsi que la présence des deux tubes métalliques rend le présent système très coûteux.

Le document WO02/087042 publié le 31 octobre 2002 décrit un système de raccordement électrique composé d'un manchon étanche en caoutchouc, de deux boîtiers servant d'inserts de raccordement fixés sur les parois des cellules à raccorder, d'une barre conductrice permettant une liaison électrique entre les deux cellules et située à l'intérieur du manchon étanche, et de deux broches électriques situées respectivement au centre de chacun des boîtiers fixés sur les parois des cellules. Le manchon électriquement étanche est fabriqué à partir de caoutchouc de silicone et porte une peinture conductrice d'une épaisseur de 0.1 mm sur la totalité de sa face interne et la partie centrale de sa face externe. Il possède en outre une nervure cylindrique interne et une nervure cylindrique externe flexibles et recouvertes de peinture conductrice. La nervure cylindrique externe est en contact avec les vis pour mettre l'extérieur du raccord au potentiel de terre. Un tel montage connu est bien adapté pour deux cellules ayant des inserts de raccordement bien alignés, ce qui nécessite des tolérances de fabrication très serrées. En cas de mauvais alignement axial des inserts, la connexion électrique est soumise à des contraintes mécaniques, avec des risques d'usure prématurée du dispositif de raccordement.

Un but de la présente invention est de fournir un dispositif amélioré de raccordement électrique entre deux cellules d'appareillage à haute tension présentant des propriétés supérieures à celles des systèmes précédents.

### PRESENTATION DE L'INVENTION

L'invention concerne un dispositif selon la revendication 1.

Des aspects préférés, mais non limitatifs du dispositif de raccordement électrique selon l'invention sont les suivants :
- l'appareil électrique associé est une cellule d'appareillage électrique à haute tension logée dans une cuve étanche remplie de gaz isolant, notamment de l'hexafluorure de soufre.
- l'appareil électrique associé est un transformateur électrique.
- le ressort est un ressort métallique.
- le ressort est un ressort en acier inoxydable.
- le ressort comprend une boucle ouverte présentant un angle de recouvrement de ses extrémités compris entre 0 et 180°.
- le ressort comprend au moins un oeillet.
- l'oeillet s'étend dans un plan différent du plan comprenant la boucle ouverte.
- l'oeillet s'étend dans un plan diamétral à la boucle ouverte formant ressort.
- l'élément électriquement conducteur au niveau de la gorge du manchon électriquement isolant est une peinture conductrice.
- le contact de connexion est lisse et comporte en son milieu une gorge.
- le manchon isolant comporte une nervure recouverte de peinture conductrice au centre de sa surface interne.
- la nervure du manchon électriquement isolant pénètre dans la gorge du contact de connexion lorsque les cellules d'appareillage électrique à raccorder sont raccordées.
- les extrémités internes du manchon électriquement isolant sont tronconiques.
- les extrémités externes du manchon isolant sont tronconiques.
- les broches comportent chacune une cavité centrale borgne munie de rainures.

### PRESENTATION DES FIGURES

D'autres caractéristiques et avantages de l'invention ressortiront encore de la description qui suit, laquelle est purement illustrative et non limitative et doit être lue en regard des dessins annexés, sur lesquels :
- La Figure 1 illustre une vue éclatée en perspective du dispositif de raccordement de la présente invention ;
- La figure 2 illustre une vue en perspective d'une cellule à raccorder à l'aide du dispositif de la présente invention ;
- La Figure 3 illustre une vue en coupe du dispositif de raccordement de la présente invention lorsque tous les éléments du dispositif coopèrent;
- La figure 4 est une vue en perspective du ressort de la présente invention.

### DESCRIPTION D'UN MODES DE REALISATION DE L'INVENTION

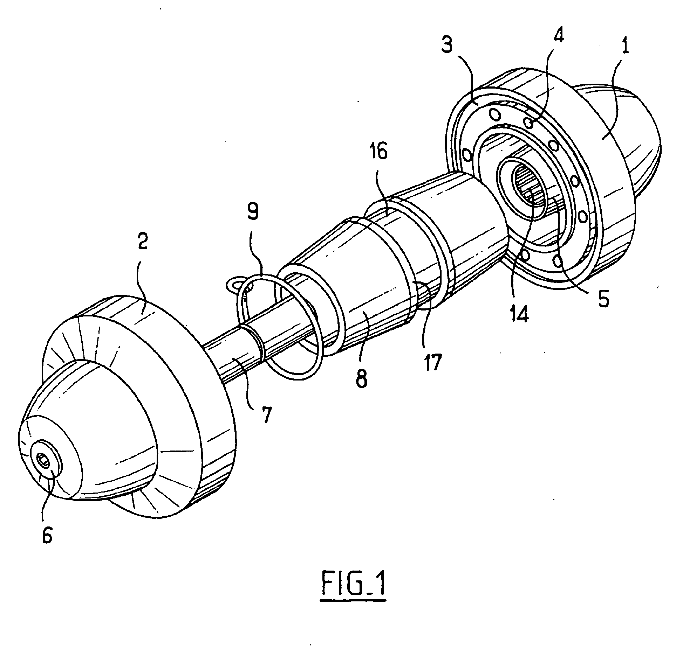

Le dispositif de raccordement électrique selon la présente invention, permettant le raccordement de deux cellules à haute tension, va maintenant être détaillé en référence aux figures 1 à 4. Les éléments équivalents représentés dans les différentes figures porteront les mêmes références numériques.

On a représenté à la figure 1 une vue éclatée de chacun des éléments composant le dispositif de raccordement à isolation intégrale et à champ dirigé. Il comprends notamment deux boîtiers électriquement isolant 1,2 fixés aux panneaux des cellules électriques à relier, ainsi que deux broches de connexion 5,6 placées chacune dans un des boîtiers 1,2. Le système comprend en outre une barre électriquement conductrice 7 permettant une liaison électrique entre les deux cellules à raccorder. Cette barre conductrice se situe, une fois le dispositif mis en place, à l'intérieur d'un manchon flexible 8 électriquement isolant qui comprend sur sa surface externe un ressort 9.

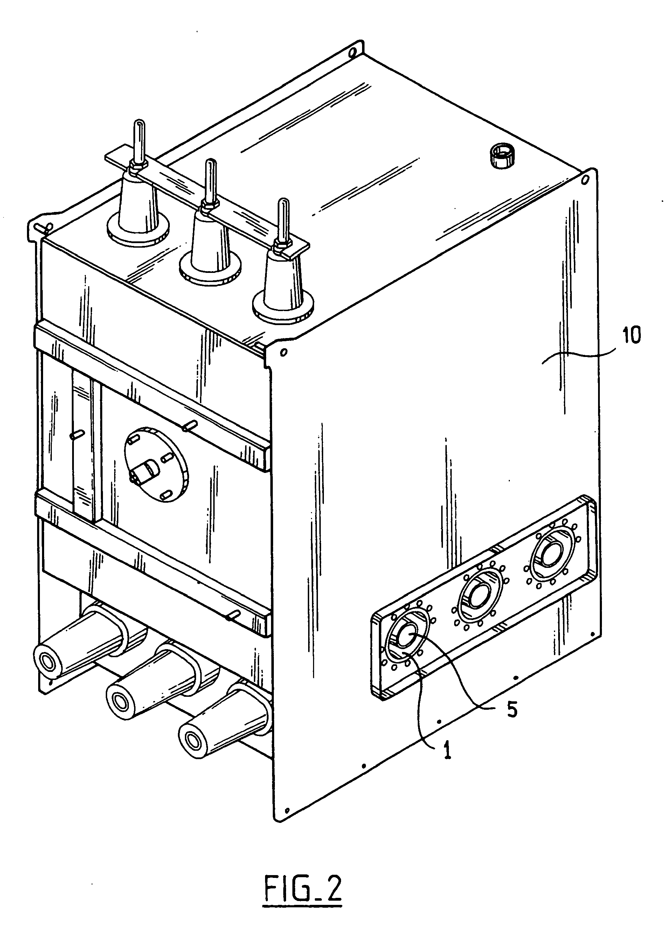

La figure 2 nous présente une vue en perspective d'une cellule à raccorder à l'aide du dispositif de la présente invention. La partie active de la cellule à raccorder est logée dans une cuve métallique étanche contenant un gaz isolant de type hexafluorure de soufre. Le raccordement s'effectue sur le côté de la cellule, à travers la cloison métallique 10. Le boîtier électriquement isolant 1 comprenant en son centre la broche de connexion 5 est fixé sur la cloison métallique 10 au niveau d'une ouverture ménagée prévue à cet effet dans ladite cloison métallique. Chacun des boîtiers 1,2 comprend une gorge 3 dans laquelle est placé un joint torique pour l'étanchéité du système au gaz. Par ailleurs, chacun des boîtiers est muni de logements cylindriques 4 pour accueillir des tiges filetées qui permettent de plaquer le boîtier sur la cloison métallique 10 de la cellule à raccorder. On remarque que la cellule de la figure 2 comprend trois boîtiers fixes. En effet, le dispositif est prévu pour la connexion électrique de cellules en triphasé, chaque cellule est donc équipée du dispositif en triple exemplaire pour connecter une à une les trois phases de chaque cellule.

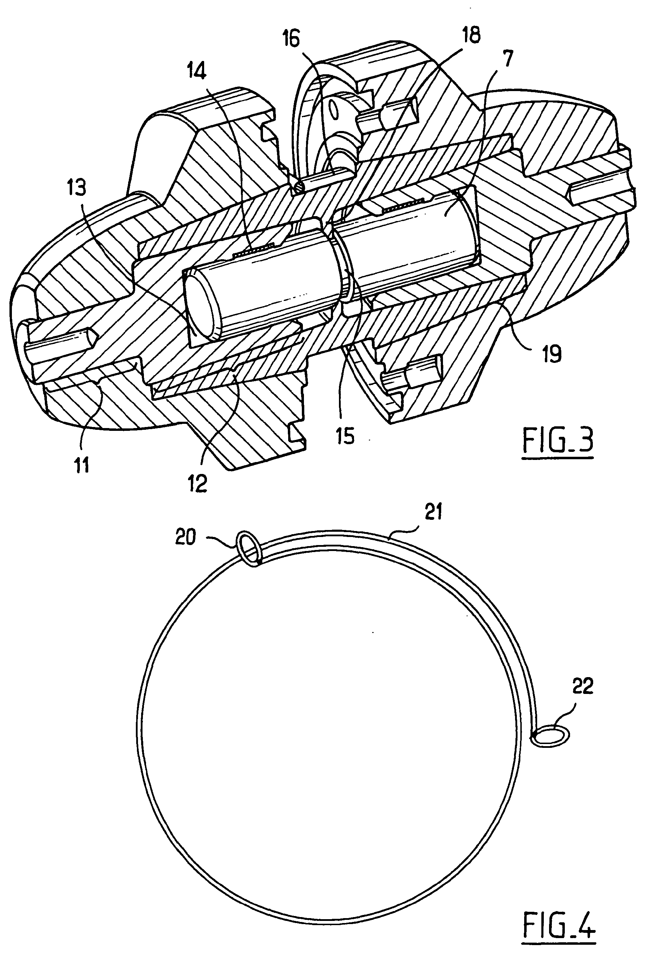

Une vue en coupe de l'agencement des différentes pièces composant le dispositif de la présente invention, une fois les cellules raccordées, a été représentée à la figure 3. Le premier boîtier 1 et la broche de connexion 5 sont situés sur la première cellule à raccorder. Le deuxième boîtier 2 et la broche de connexion 6 sont situés sur la deuxième cellule à raccorder.

Chaque broche de connexion 5,6 est étagée. Une broche de connexion 5,6 comporte un tronçon 11 cylindrique de faible diamètre dirigé vers l'intérieur de la cellule et un tronçon 12 de plus fort diamètre dirigé vers l'extérieur de la cellule à raccorder, ledit tronçon de plus fort diamètre étant accessible par une ouverture ménagée dans la cloison métallique de ladite cellule. Le côté de diamètre le plus important comporte une cavité 13 centrale borgne munie de rainures visibles notamment sur la figure 1, cavité central qui est susceptible d'accueillir la barre 7 électriquement conductrice. Les rainures permettent notamment de tenir la barre électriquement conductrice lorsque le système de raccordement de cellules est en place entre deux cellules d'appareillage électrique.

La barre électriquement conductrice est munie en son centre d'une gorge 15. Cette barre conductrice se trouve à l'intérieur du manchon 8 électriquement isolant. La barre électriquement conductrice est lisse.

Le manchon 8 électriquement isolant comporte, au centre de sa surface externe, une gorge 16 ayant pour effet une plus grande souplesse de la partie centrale du manchon 8 afin de palier au problème de désalignement axial des cellules à raccorder. Le manchon 8 étanche est en élastomère et est recouvert d'une peinture conductrice 17, visible en partie sur la figure 1, sur sa surface externe au niveau de la gorge 16. Le manchon 8 électriquement isolant est également recouvert de peinture conductrice sur la totalité de sa surface interne afin de répartir de manière uniforme le champ électrique lors du passage du courant dans la barre 7 électriquement conductrice. De plus, il comporte dans sa partie interne une nervure 18 cylindrique qui pénètre dans la gorge 15 de la barre 7 électriquement conductrice, permettant ainsi d'une part de maintenir la barre 7 conductrice en place et d'autre part de mettre en contact ladite barre avec la peinture conductrice 17 qui recouvre la surface interne du manchon 8 électriquement isolant. Préférentiellement, le plan moyen de la gorge 15 de la barre 7 électriquement conductrice est situé à égale distance des extrémités de la barre 7 électriquement conductrice. Préférentiellement, le plan moyen de la nervure 18 cylindrique du manchon 8 est situé à égale distance des extrémités du manchon 8. Le fait que les plans moyens de la gorge et du manchon soient respectivement situés à égale distance des extrémités de la barre et du manchon permet d'assurer le centrage de la barre 7 et du manchon 8 l'un par rapport à l'autre. Les extrémités des surfaces externes et internes du manchon 8 sont tronconiques. Cette double conicité des extrémités du manchon favorise l'échappement des bulles d'air entre les pièces (boîtier électriquement isolant et manchon) lors de la mise en place dudit manchon, et permet ainsi une meilleure isolation électrique ainsi qu'une meilleurs isolation mécanique du dispositif. En effet, dans le cas d'un manchon à extrémités cylindriques, l'air ne s'échappe pas lors du rapprochement des cellules, et a donc tendance à exercer sur le manchon une force s'opposant à la force exercée (par l'utilisateur) pour rapprocher les cellules. Dans le cas du manchon 8 de la présente invention, l'échappement de l'air est favorisé grâce aux extrémités tronconiques du manchon 8, ce qui facilite le rapprochement des cellules. Par ailleurs, pour empêcher les amorçages électriques au niveau du dispositif de raccordement de cellule de la présente invention, les parties tronconiques du manchon 8 électriquement isolant sont comprimées dans les boîtiers fixes 1,2 au niveau de l'interface 19 lorsque les deux cellules à raccorder sont rapprochées. Le manchon 8 électriquement isolant comprend, au niveau de la gorge 16 située sur sa surface externe, un ressort 9.

Ce ressort 9 métallique, et préférentiellement en acier inoxydable est représenté à la figure 4. Ce ressort comprend une boucle ouverte 21 dont le diamètre interne (lorsque le ressort est au repos) est inférieur au diamètre externe de la gorge 16 du manchon 8. Ceci permet d'assurer le contact entre le ressort 9 et la gorge 16 lorsque le ressort 9 est placé dans la gorge 16. Le ressort comprend en outre (au moins un oeillet, mais préférentiellement) deux oeillets 20,22 s'étendant dans un plan différent de la boucle ouverte, préférentiellement dans un plan diamétral à la boucle ouverte. Ces oeillets viennent en contact avec les cellules d'appareillage lorsque celles-ci sont raccordées. L'angle de recouvrement des extrémités de la boucle ouverte est compris entre 0 et 180°.
Lorsque le ressort est mis en place dans le manchon, il (le ressort) est en contact avec la peinture semi-conductrice de la gorge 16 dudit manchon, et sert de raccord de masse. En effet, lorsque les deux cellules sont raccordées, on rapproche les deux boîtiers. Les oeillets 20,22 sont alors en contact avec les cloisons métalliques des cellules qui sont au potentiel de la terre, et la boucle ouverte 21 est quant à elle en contact avec la couche de peinture semi-conductrice qui recouvre, au niveau de la gorge 16, la partie externe du manchon.
La forme particulière en boucle ouverte 21 du ressort 9 lui permet de présenter une élasticité dans le plan de la boucle ouverte 21. Ceci facilite la mise en place du ressort 9 dans la gorge 16 du manchon en permettant d'élargir le diamètre interne de la boucle ouverte afin de faire passer le manchon à l'intérieur de la boucle ouverte, tout en assurant une déformation non permanente du ressort (ce qui assure que le ressort reviendra bien en contact avec la peinture semi-conductrice de la gorge 16 du manchon 8). Par ailleurs, les oeillets permettent à l'utilisateur d'élargir plus facilement le diamètre interne de la boucle ouverte.
Avantageusement, les oeillets comportent également une boucle ouverte. Ceci permet d'assurer une déformation non permanente des oeillets lorsque le système de raccordement de cellule est mis en place entre deux cellules.
La présence de boucles ouvertes sur les oeillets présente l'avantage de permettre la réutilisation du système de raccordement, et plus particulièrement du ressort 9. En effet, lorsque le système de raccordement de cellules est mis en place entre deux cellules, les oeillets sont comprimés contre les faces des cellules, cette compression provoquant une déformation de l'oeillet. Lorsque les cellules ainsi raccordées sont séparées, l'oeillet reprend sa forme initiale, et peut être réutilisé.
Le ressort 9 présente donc un double effet ressort :
- un effet ressort dans le plan médian ou plan comprenant la boucle ouverte (grâce à la présence de la boucle ouverte),
- un effet ressort dans le plan diamétral au plan comprenant la boucle ouverte (grâce à la présence de la boucle ouverte du ressort et des oeillets).
En effet, lorsque la boucle ouverte est placée dans la gorge du manchon, celle-ci - du fait de l'élasticité que présente le ressort dans le plan médian - sert le manchon de sorte qu'elle est en contact avec la peinture semi-conductrice. Par ailleurs, lorsque les deux cellules à raccorder sont rapprochées - du fait de l'élasticité que présente le ressort dans le plan diamétral - les oeillets viennent en contact avec les cloisons des cellules à raccorder.
Grâce à cette mise au potentiel de la terre de la surface externe du manchon 8 par le ressort, on assure la continuité électrique entre le manchon et les deux cellules adjacentes.

Le lecteur aura compris que de nombreuses variantes de la présente invention peuvent être mise en place. Par exemple les dimensions des différentes pièces composant le dispositif de raccordement de cellule peuvent varier. Le présent dispositif utilisé pour le raccordement de cellule haute tension pourrait être utilisé pour le raccordement de boîtier électrique basse tension pour des systèmes nécessitant une étanchéité mécanique et électrique tels que ceux employés dans l'aviation ainsi que pour des liaisons avec un transformateur. La forme des pièces utilisées peut également varier. Par ailleurs le manchon 8 électriquement isolant et les boîtiers fixés dans la cloison métallique peuvent être de différent type de matériau isolant. Le ressort et les cloisons métalliques des cellules peuvent également être réalisées dans différents types de matériaux si tant est qu'ils aient les mêmes propriétés. Par exemple le ressort pourrait être un ressort en élastomère recouvert de peinture semi-conductrice.

## Revendications

1. Dispositif de raccordement électrique entre au moins une cellule d'appareillage électrique à haute tension logé dans une cuve étanche remplie de gaz isolant, notamment de l'hexafluorure de soufre, et un appareil électrique associé, comprenant, **le dispositif de raccordement comportant :**
- des boîtiers (1, 2) électriquement isolants fixés de manière étanche dans deux ouvertures ménagées dans les cloisons électriquement conductrices des appareillages à raccorder,
- un contact de connexion électrique (7) coopérant à ses extrémités avec une paire de broches de connexion (5, 6) en matériau conducteur, situé au centre des boîtiers,
- un manchon (8) électriquement isolant en matériau élastomère souple qui comporte, sur sa surface externe, une gorge (16) comportant un élément électriquement conducteur, ledit manchon entourant coaxialement le contact de connexion (7) ainsi que les broches de connexion (5, 6) et prenant appui sur les surfaces internes des boîtiers (1, 2) électriquement isolant fixés dans les cloisons électriquement conductrices des appareillages à raccorder,
- un ressort placé dans la gorge (16) du manchon (8) souple, le ressort étant d'une part en contact avec le manchon (8) souple, et d'autre part destiné à venir en contact avec les cloisons électriquement conductrices des appareillages lorsque ceux- ci sont raccordés,
**caractérisé en ce que le ressort comprend une boucle ouverte.**

2. Dispositif de raccordement électrique selon la revendication 1, **caractérisé en ce que** le ressort est un ressort métallique.

3. Dispositif de raccordement électrique selon l'une des revendications précédentes, **caractérisé en ce que** le ressort est un ressort en acier inoxydable.

4. Dispositif de raccordement électrique selon la revendication 1, **caractérisé en ce que** le ressort comprend une boucle ouverte (21) présentant un angle 20 de recouvrement de ses extrémités compris entre 0 et 180.

5. Dispositif de raccordement électrique selon l'une des revendications précédentes, **caractérisé en ce que** le ressort comprend au moins un oeillet (20).

6. Dispositif de raccordement électrique selon la revendication 5, **caractérisé en ce que** l'oeillet (20) s'étend dans un plan différent du plan comprenant la boucle ouverte (21).

7. Dispositif de raccordement électrique selon l'une quelconque des revendications 5 ou 6, **caractérisé en ce que** l'oeillet s'étend dans un plan diamétral à la boucle ouverte formant ressort.

8. Dispositif de raccordement électrique selon l'une des revendications précédentes, **caractérisé en ce que** l'élément électriquement conducteur au niveau de la gorge (16) du manchon (8) électriquement isolant est une peinture conductrice.

9. Dispositif de raccordement électrique selon l'une des revendications précédentes, **caractérisé en ce que** le contact de connexion (7) est lisse et comporte en son milieu une gorge (15).

10. Dispositif de raccordement électrique selon la revendication **8**, **caractérisé en ce que** le manchon (8) isolant comporte une nervure recouverte de peinture conductrice au centre de sa surface interne.

11. Dispositif de raccordement électrique selon la revendication **10**, **caractérisé en ce que** la nervure (18) du manchon (8) électriquement isolant pénètre 20 dans la gorge (15) du contact de connexion (7) lorsque les cellules d'appareillage électrique à raccorder sont raccordées.

12. Dispositif de raccordement électrique selon l'une quelconque des revendications précédentes, **caractérisé en ce que** les extrémités internes du 25 manchon (8) électriquement isolant sont tronconiques.

13. Dispositif de raccordement électrique selon l'une quelconque des revendications précédentes, **caractérisé en ce que** les extrémités externes du manchon (8) isolant sont tronconiques.

14. Dispositif de raccordement électrique selon la revendication 1, **caractérisé en ce que** les broches (5, 6) comportent chacune une cavité centrale borgne munie de rainures.

15. Cellule d'appareillage électrique destinée à être raccordé à un appareil électrique associé, **caractérisée en ce que** la cellule comprend un dispositif de raccordement selon l'une des revendications 1 à 14.

## Patentansprüche

1. Vorrichtung zur elektrischen Kupplung zwischen mindestens einer Zelle einer elektrischen Hochspannungsapparatur, die in einem dichten mit isolierendem Gas gefüllten Behälter, insbesondere Schwefelhexafluorid, untergebracht ist, und einem assoziierten elektrischen Gerät,
umfassend, dass die Vorrichtung zur Kupplung aufweist:
- elektrisch isolierende Gehäuse (1,2) die abdichtend in zwei Öffnungen fixiert sind, die in elektrisch leitenden Trennwänden der zu kuppelnden Apparaturen angeordnet sind,
- einen elektrischen Anschlusskontakt (7) der an seinen Enden mit einem Anschlusselemente-Paar (5,6) aus leitendem Material zusammenwirkt, der im Zentrum der Gehäuse angeordnet ist,
- eine elektrisch isolierende Abdeckung (8) aus elastomerem flexiblem Material das auf seiner externen Oberfläche eine Aussparung (16) aufweist, die ein elektrisch leitendes Element aufweist, wobei die Abdeckung koaxial den Anschlusskontakt (7) sowie die Anschlusselemente-Paare (5,6) umgibt, und die internen Oberflächen der elektrisch isolierenden Gehäuse (1,2), die in den elektrisch leitenden Trennwänden der zu kuppelnden Apparaturen fixiert sind, abstützt,
- eine Feder die in der Aussparung (16) der flexiblen Abdeckung (8) platziert ist, wobei die Feder auf der einen Seite mit der flexiblen Abdeckung (8) in Kontakt steht, und auf der anderen Seite dazu bestimmt ist, mit den elektrisch leitenden Trennwänden der Apparaturen in Kontakt zu kommen, wenn diese gekuppelt werden,
**dadurch gekennzeichnet dass** die Feder eine offene Schlaufe aufweist.

2. Vorrichtung zur elektrischen Kupplung nach Anspruch 1, **dadurch gekennzeichnet, dass** die Feder eine metallische Feder ist.

3. Vorrichtung zur elektrischen Kupplung nach einem der vorhergehenden Ansprüche, **dadurch gekennzeichnet, dass** die Feder eine Feder aus korrosionsbeständigem Stahl ist.

4. Vorrichtung zur elektrischen Kupplung nach Anspruch 1, **dadurch gekennzeichnet dass** die Feder eine offen Schlaufe (21) umfasst, die einen Überdeckungswinkel 20 seiner Enden zwischen 0 und 180 aufweist.

5. Vorrichtung zur elektrischen Kupplung nach einem der vorhergehenden Ansprüche, **dadurch gekennzeichnet dass** die Feder mindestens eine Öse (20) umfasst.

6. Vorrichtung zur elektrischen Kupplung nach Anspruch 5, **dadurch gekennzeichnet dass** die Öse (20) sich in einer anderen Ebene erstreckt als der Ebene, welche die offene Schlaufe (21) umfasst.

7. Vorrichtung zur elektrischen Kupplung nach einem beliebigen der Ansprüche 5 oder 6, **dadurch gekennzeichnet dass** die Öse sich in einer Ebene erstreckt, die diametral zur Feder bildenden offenen Schlaufe ist.

8. Vorrichtung zur elektrischen Kupplung nach einem der vorhergehenden Ansprüche, **dadurch gekennzeichnet dass** das elektrisch leitende Element auf dem Niveau der Aussparung (16) der elektrisch isolierenden Abdeckung (8) ein leitender Anstrich ist.

9. Vorrichtung zur elektrischen Kupplung nach einem der vorhergehenden Ansprüche, **dadurch gekennzeichnet dass** der Anschlusskontakt (7) glatt ist und in seiner Mitte eine Aussparung (15) aufweist.

10. Vorrichtung zur elektrischen Kupplung nach Anspruch 8, **dadurch gekennzeichnet dass** die isolierende Abdeckung (8) eine Rippe aufweist, die im Zentrum ihrer internen Oberfläche von einem leitenden Anstrich bedeckt ist.

11. Vorrichtung zur elektrischen Kupplung nach Anspruch 10, **dadurch gekennzeichnet dass** die Rippe (18) der elektrisch isolierenden Abdeckung (8) in die Aussparung (15) des Anschlusskontakts (7) eindringt 20, wenn die zu kuppelnden Zellen der elektrischen Apparatur gekuppelt werden.

12. Vorrichtung zur elektrischen Kupplung nach einem beliebigen der vorhergehenden Ansprüche, **dadurch gekennzeichnet dass** die internen Enden der 25 elektrisch isolierenden Abdeckung (8) kegelstumpfförmig sind.

13. Vorrichtung zur elektrischen Kupplung nach einem beliebigen der vorhergehenden Ansprüche, **dadurch gekennzeichnet dass** die externen Enden der isolierenden Abdeckung (8) kegelstumpfförmig sind.

14. Vorrichtung zur elektrischen Kupplung nach Anspruch 1, **dadurch gekennzeichnet dass** die Elemente (5, 6) jede einen zentralen mit Rillen versehenen Blindhohlraum aufweisen.

15. Zelle einer elektrischen Apparatur, die dazu bestimmt ist an ein elektrisch assoziiertes Gerät gekuppelt zu werden, **dadurch gekennzeichnet dass** die Zelle eine Vorrichtung zur elektrischen Kupplung gemäß einem der Ansprüche 1 bis 14 umfasst.

## Claims

1. An electrical connecting device between at least one high-voltage electrical apparatus cell housed in an airtight tank filled with insulating gas, especially sulphur hexafluoride, and an associated electrical apparatus, comprising the connecting device comprising:
- electrically insulating housings (1, 2) fixed airtight in two openings made in the electrically conducting partitions of the devices to be connected,
- an electrical connection contact (7) cooperating at its ends with a pair of connecting pins (5, 6) made of conducting material, located at the centre of the housings,
- an electrically insulating sleeve (8) made of supple elastomer material which comprises, on its external surface, a groove (16) comprising an electrically conducting element, said sleeve coaxially enclosing the connection contact (7) as well as the connection pins (5, 6) and being supported on the internal surfaces of the electrically insulating housings (1, 2) fixed in the electrically conducting partitions of the apparatuses to be connected,
- a spring placed in the groove (16) of the supple sleeve (8), the spring both being in contact with the supple sleeve (8) and also designed to come into contact with the electrically conducting partitions of the apparatuses when the latter are connected,
**characterised in that** the spring comprises an open loop.

2. The electrical connecting device according to Claim 1, **characterised in that** the spring is a metal spring.

3. The electrical connecting device according to any one of the preceding claims, **characterised in that** the spring is a spring made of stainless steel.

4. The electrical connecting device according to Claim 1, **characterised in that** the spring comprises an open loop (21) having an overlap angle of its ends between 0 and 180°.

5. The electrical connecting device according to any one of the preceding claims, **characterised in that** the spring comprises at least one eyelet (20).

6. The electrical connecting device according to Claim 5, **characterised in that** the eyelet (20) extends in a plane different to the plane comprising the open loop (21).

7. The electrical connecting device according to any one of Claims 5 or 6, **characterised in that** the eyelet extends in a plane diametrical to the open loop forming the spring.

8. The electrical connecting device according to any one of the preceding claims, **characterised in that** the electrically conducting element at the level of the groove (16) of the electrically insulating sleeve (8) is conducting paint.

9. The electrical connecting device according to any one of the preceding claims, **characterised in that** the connection contact (7) is smooth and comprises in its centre a groove (15).

10. The electrical connecting device according to Claim 8, **characterised in that** the insulating sleeve (8) comprises a rib covered with conducting paint at the centre of its internal surface.

11. The electrical connecting device according to Claim 10, **characterised in that** the rib (18) of the electrically insulating sleeve (8) penetrates the groove (15) of the connection contact (7) when the electrical apparatus cells to be connected are connected.

12. The electrical connecting device according to any one of the preceding claims, **characterised in that** the internal ends of the electrically insulating sleeve (8) are truncated.

13. The electrical connecting device according to any one of the preceding claims, **characterised in that** the external ends of the insulating sleeve (8) are truncated.

14. The electrical connecting device according to Claim 1, **characterised in that** the pins (5, 6) each comprise a blind central cavity provided with grooves.

15. An electrical apparatus cell designed to be connected to an associated electrical apparatus, **characterised in that** the cell comprises a connecting device according to any one of Claims 1 to 14.
